# EUROPEAN PATENT APPLICATION

(11) **EP 2 423 300 A1**
(43) Date of publication of application: **29.02.2012**
(21) Application number: 10767083.8
(22) Date of filing: 21.04.2010
(51) Int. Cl.: C12G 3/02

(54) **SPARKLING ALCOHOLIC DRINK AND METHOD FOR PRODUCING SAME**

(30) Priority: 24.04.2009 JP 2009106407
(71) Applicant: Sapporo Breweries Limited, Tokyo 150-8522 (JP)
(72) Inventor: KIMURA, Tatsuji, Tokyo 150-8522 (JP); ARAKI, Shigeki, Tokyo 150-8522 (JP); IIMURE, Takashi, Tokyo 150-8522 (JP)
(74) Representative: Ritthaler, Wolfgang
(86) International application number: PCT/JP2010/057057
(87) International publication number: WO 2010/123026

(57) **Abstract**

Provided are a sparkling alcoholic beverage having improved drinkability and a method for producing the same. The method for producing a sparkling alcoholic beverage according to the present invention is a method for producing a sparkling alcoholic beverage, including: a pre-fermentation step (10) of preparing a pre-fermentation solution by using a raw material containing a nitrogen source and a carbon source and water; and a fermentation step (20) of conducting alcoholic fermentation by adding a yeast to the pre-fermentation solution, in which the raw material further contains laccase in the pre-fermentation step (10).

## Description

### TECHNICAL FIELD

The present invention relates to a sparkling alcoholic beverage and a method for producing the same, and more particularly, to an improvement in drinkability of a sparkling alcoholic beverage.

### BACKGROUND ART

In recent years, in addition to beer, there is appearing on the market a sparkling alcoholic beverage produced by a method similar to that of beer, using malt in a smaller amount compared with the amount used for beer or without using malt (see, e.g., Patent Document 1).

### Prior Art Document

### Patent Document

[Patent Document 1] WO 2005/005593 A1

### DISCLOSURE OF THE INVENTION

### Problems to be Solved by the Invention

In the market of such sparkling alcoholic beverages, an improvement in ease of drinking, that is, drinkability, has been required. However, a sparkling alcoholic beverage having improved drinkability has still not been fully studied.

The present invention has been made in view of the above-mentioned problem, and one of the objects of the present invention is to provide a sparkling alcoholic beverage having improved drinkability and a method of producing the beverage.

### Means for Solving the Problems

A method for producing a sparkling alcoholic beverage according to one embodiment of the present invention for solving the above-mentioned problem is a method for producing a sparkling alcoholic beverage, including: a pre-fermentation step of preparing a pre-fermentation solution by using a raw material containing a nitrogen source and a carbon source and water; and a fermentation step of conducting alcoholic fermentation by adding a yeast to the pre-fermentation solution, in which the raw material contains laccase in the pre-fermentation step. According to the present invention, a method for producing a sparkling alcoholic beverage having improved drinkability is provided.

Further, the raw material may contain 550 U/g or less of the laccase. Further, the raw material may contain 1 U/g or more and 550 U/g or less of the laccase. Further, the raw material may contain 1 U/g or more and 60 U/g or less of the laccase. Further, the raw material may contain 1 U/g or more and 50 U/g or less of the laccase. When the raw material for the pre-fermentation solution contains laccase in the above-mentioned range, the drinkability of the sparkling alcoholic beverage is more reliably improved. Further, the raw material may contain malt prepared from barley lipoxygenase-1-less barley.

A sparkling alcoholic beverage according to one embodiment of the present invention for solving the above-mentioned problem is produced by any one of the above-mentioned methods. According to the present invention, a sparkling alcoholic beverage having improved drinkability is provided.

### EFFECT OF THE INVENTION

According to the present invention, a sparkling alcoholic beverage having improved drinkability and a method for producing the same are provided.

### BRIEF DESCRIPTION OF THE DRAWINGS

FIG. 1 is an explanatory diagram showing main steps included in one example of a method for producing a sparkling alcoholic beverage according to one embodiment of the present invention.
FIG. 2 is an explanatory diagram showing one example of concentrations of the laccase in a method for producing a beer according to one embodiment of the present invention.
FIG. 3 is an explanatory diagram showing one example of results of sensory tests of a beer produced in one embodiment of the present invention.
FIG. 4 is an explanatory diagram showing one example of results of measurement of foam properties of a beer produced in one embodiment of the present invention.
FIG. 5 is an explanatory diagram showing another example of the concentrations of the laccase in a method for producing a beer according to one embodiment of the present invention.
FIG. 6 is an explanatory diagram showing another example of results of sensory tests of a beer produced in one embodiment of the present invention.
FIG. 7 is an explanatory diagram showing another example of results of measurement of foam properties of a beer produced in one embodiment of the present invention.
FIG. 8 is an explanatory diagram showing still another example of results of sensory tests of a beer produced in one embodiment of the present invention.
FIG. 9 is an explanatory diagram showing one example of results of sensory tests of a Happoshu produced by using malt in one embodiment of the present invention.
FIG. 10 is an explanatory diagram showing one example of results of sensory tests of a sparkling alcoholic beverage produced without using malt in one embodiment of the present invention.
FIG. 11 is an explanatory diagram showing one example of results of sensory tests of a sparkling alcoholic beverage produced by using malt prepared from barley lipoxygenase-1-less barley in one embodiment of the present invention.
FIG. 12 is an explanatory diagram showing one example of results of sensory tests of a sparkling alcoholic beverage produced by using barley without using malt in one embodiment of the present invention.

### BEST MODE FOR CARRYING OUT THE INVENTION

Hereinafter, one embodiment of the present invention is described. It should be noted that the present invention is not limited to this embodiment.

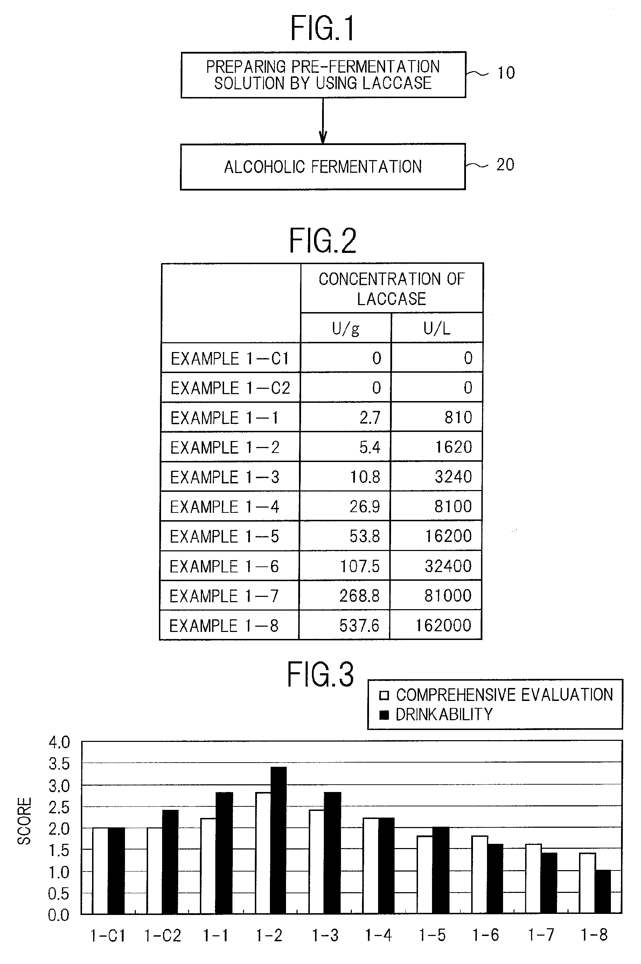

FIG. 1 is an explanatory diagram showing main steps included in one example of a method for producing a sparkling alcoholic beverage according to one embodiment of the present invention (hereinafter, referred to as "production method of the present invention"). As shown in FIG. 1, the production method of the present invention includes a pre-fermentation step 10 of preparing a pre-fermentation solution by using laccase and a fermentation step 20 of conducting alcoholic fermentation by adding a yeast to the pre-fermentation solution.

It should be noted that an alcoholic beverage according to the present invention is, for example, a beverage containing ethanol in a concentration of 1 vol% or more. In addition, a sparkling alcoholic beverage according to the present invention is an alcoholic beverage containing carbon dioxide, such as beer or Happoshu, the alcoholic beverage having, for example, foam-forming, whereby a foam layer is formed on an upper part of liquid level when poured into a vessel such as a glass, and foam-stability, whereby the formed foam is held for a certain period of time or longer. Specifically, this sparkling alcoholic beverage is, for example, an alcoholic beverage exhibiting an NIBEM value (unit representing the foam-stability) of 50 or more, according to the European Brewery Convention (EBC) method.

In the pre-fermentation step 10, the pre-fermentation solution is prepared by using a raw material containing a nitrogen source and a carbon source and water. The nitrogen source is not particularly limited as long as the nitrogen source is a nitrogen-containing compound which can be used in alcoholic fermentation by a yeast, and any one kind or two or more kinds of compounds may be appropriately selected and used. The carbon source is not particularly limited as long as the carbon source is a carbon-containing compound which can be used in alcoholic fermentation by a yeast, and any one kind or two or more kinds of compounds may be appropriately selected and used.

More specifically, malt maybe used as apart of the raw material. The malt contains a nitrogen source and a carbon source. The malt can be prepared by saturating barley with an appropriate amount of water at an appropriate temperature in the presence of oxygen to germinate the barley.

Amounts of the nitrogen source and the carbon source in the malt can be adjusted by germination conditions (e.g., degree of germination progress). In the case of using the malt, the pre-fermentation step 10 may include the step of preparing the malt by germinating barley as described above.

The malt is not particularly limited as long as the malt is prepared by germinating barley, and for example, malt prepared from barley lipoxygenase-1 (LOX-1)-less barley (hereinafter, referred to as "LOX-less barley") (hereinafter, referred to as "LOX-less malt") may be used. The LOX-less barley is barley having a mutation in a LOX gene (see, for example, JP 2008-043348 A). The LOX-less malt may be prepared by germinating the LOX-less barley in the same way as for general barley.

Meanwhile, a degradation product of a protein or a peptide derived from grain (hereinafter, referred to as "protein degradation product") may be used as a part of the raw material. The protein degradation product contains mainly a nitrogen source. The protein degradation product may be prepared by degradation of a protein or a peptide extracted from grain (degradation into low-molecular-weight substances) with a degradative enzyme such as protease or an acid. Therefore, the protein degradation product contains an amino acid which can be used by a yeast. It should be noted that the protein degradation product may contain a protein or a peptide derived from grain.

The grain to be used as a raw material for the protein degradation product is not particularly limited as long as the grain contains a protein or a peptide, and any one kind or two or more kinds of grains may be appropriately selected and used. That is, for example, legumes and cereals may be used.

Examples of the legumes which may be used include yellow peas, soybeans, adzuki beans, black soybeans, mung beans, Taisho Kintoki beans, Tora beans, chickpeas, fava beans, mottled kidney beans, flower beans, lentils, and blue soybeans. Examples of the cereals which may be used include corn (maize), rice, and potato.

More specifically, for example, at least one selected from the group consisting of a degradation product of a protein or a peptide derived from yellow peas, a degradation product of a protein or a peptide derived from soybeans, and a degradation product of a protein or a peptide derived from corn may preferably be used.

In the case of using the protein degradation product, the pre-fermentation step 10 may include the step of preparing the protein degradation product by allowing a degradative enzyme such as protease or peptidase to act on a protein or a peptide extracted from grain.

Meanwhile, a degradation product of starch derived from grain (hereinafter, referred to as "starch degradation product") may be used as a part of the raw material. The starch degradation product contains mainly a carbon source. The starch degradation product may be prepared by degradation of starch extracted from grain with a degradative enzyme such as amylase or an acid. Therefore, the starch degradation product contains a sugar which can be used by a yeast (so-called fermentable sugar). Examples of the fermentable sugar include a monosaccharide such as glucose or fructose, a disaccharide such as maltose or sucrose, and a trisaccharide such as maltotriose.

The grain to be used as the raw material for the starch degradation product is not particularly limited as long as the grain contains starch, and any one kind or two or more kinds of grains may be appropriately selected and used. That is, for example, corn, potato, rice, wheat, or barley may be used. More specifically, for example, a sugar in a liquid form produced by using cereals such as corn as a raw material (so-called liquid sugar) may be used.

Meanwhile, a yeast extract may be used as a part of the raw material. The yeast extract mainly contains a nitrogen source. That is, the yeast extract contains a protein, a peptide, and an amino acid extracted from a yeast. In addition, the yeast extract may contain a peptide or an amino acid having a smaller molecular weight prepared by degrading a protein or a peptide in the yeast with a degradative enzyme or an acid.

Further, hops may be used as a part of the raw material. The hops are not particularly limited, and any one kind or two or more kinds of hops may be appropriately selected and used. The form of the hops is not particularly limited, and hops appropriately processed depending on the purpose, such as preservation or transportation, and having any form, may be used. That is, for example, pressed hops obtained by compressing dried hop cones, hop powder obtained by pulverizing dried hop cones, and hop pellets obtained by compression molding of the hop powder into pellets may be used.

Moreover, hops may not be used as a part of the raw material. In this case, a herb may be used as a part of the raw material instead of the hops. Any herb may be used as the herb, such as rosemary, cilantro, or chamomile.

Further, other materials effective for imparting, to the sparkling alcoholic beverage produced by the production method, desired properties such as coloration, impartment of a flavor and a taste, an improvement in foam-stability, and an improvement in the fermentation efficiency, or for improving the productivity of the production method, may be further used as a part of the raw material.

For example, a material for improving foam properties of the sparkling alcoholic beverage, such as foam-forming or foam-stability, may be used. That is, for example, a protein may be used. For example, a protein derived from grain similar to that used as the raw material for the above-mentioned protein degradation product may be used as the protein. More specifically, for example, a protein derived from yellow peas, a protein derived from soybeans, or a protein derived from corn may be used.

Moreover, for example, a yeast activator for promoting alcoholic fermentation by using a yeast may be used. For example, vitamins, inositol, or minerals may be used as the yeast activator.

Further, for example, a dye such as caramel dye may be used. In addition, for example, rice, corn, kaoliang, potato, or starch, used as an auxiliary material for a beer as well, may be used.

In addition, one of the features of the production method of the present invention is that the raw material for the pre-fermentation solution contains laccase. The laccase is an enzyme with an EC (Enzyme Commission) number of "1.10.3.2," and is also called polyphenol oxidase. The laccase catalyzes, for example, oxidation reactions using a variety of polyphenol-based compounds and aniline-based compounds as substrates.

The amount of the laccase to be used may be appropriately determined depending on conditions such as a production scale in the production method of the present invention and properties to be possessed by the sparkling alcoholic beverage produced. That is, the amount of the laccase (U) per unit weight (g) of the raw material may be, for example, 550 U/g or less, more preferably 1 U/g or more and 550 U/g or less.

Here, the unit "U" which represents the amount of the laccase may be calculated from the amount of the laccase required for a predetermined oxidation reaction. That is, for example, the amount of the laccase which can oxidize 1 µmol of a substrate for one minute under optimum conditions (optimum temperature, optimum pH) is defined as "1 U." More specifically, for example, in the case where the laccase is allowed to act on 4-aminoantipyrine and phenol at pH 4.5 and 30°C, the amount of laccase required for increasing the absorbance of a quinonimine dye generated by an oxidative condensation reaction at 505 nm by 0.1 for one minute in a reaction initial time may be defined as "1 U."

It should be noted that in the case where the raw material contain a liquid material, the weight of the raw material may be calculated based on the weight of a solid content in the liquid material. That is, for example, in the case where liquid sugar is used as a part of the raw material, the weight of the raw material is calculated based on the weight of a solid content in the liquid sugar. In addition, the laccase content (U/g) in the raw material may be calculated as the amount of the laccase (U) per weight of the solid content in the raw material (g).

Further, for example, the laccase content in the raw material is preferably 1 U/g or more and 60 U/g or less, more preferably 1 U/g or more and 50 U/g or less, still more preferably 1 U/g or more and 40 U/g or less.

If the laccase content is adjusted to such a range, the drinkability of the sparkling alcoholic beverage is reliably improved. Moreover, the flavor and taste and foam properties of the sparkling alcoholic beverage are also improved.

In addition, for example, the laccase content in the raw material may be 2 U/g or more and 60 U/g or less, more preferably 2 U/g or more and 50 U/g or less, still more preferably 2 U/g or more and 40 U/g or less.

If the laccase content is adjusted to such a range, the drinkability of the sparkling alcoholic beverage is more reliably improved. Moreover, the flavor and taste and foam properties of the sparkling alcoholic beverage are reliably improved.

Moreover, a product which has been subjected to an enzymatic treatment by the laccase in advance may be used as a part of the above-mentioned raw material. That is, for example, in the case of using hops as a part of the raw material, hops which have been subjected to the enzymatic treatment by the laccase may be used. For example, the enzymatic treatment may be conducted by: preparing a reaction solution containing the laccase and hops; and maintaining the reaction solution under conditions (temperature and pH) suitable for the enzymatic reaction by the laccase for a predetermined time. Then, the hops after the enzymatic treatment are collected and used as a part of the raw material.

The reaction temperature in the enzymatic treatment is not particularly limited as long as the temperature is in a range which allows the laccase to act on a substrate, and the temperature may be, for example, 30°C to 80°C, preferably 40°C to 70°C, and more preferably about 60°C. Meanwhile, the reaction time is not particularly limited as long as the time is in a range where effects provided by use of the laccase are obtained. The concentration of the laccase in the reaction solution may be appropriately determined depending on conditions such as the amount of the hops to be treated.

In addition, not only the hops but also any other material to be used as a part of the raw material, such as malt, protein degradation product, starch degradation product, yeast extract, protein, yeast activator, dye, rice, corn, kaoliang, potato, or starch, may be subjected to the enzymatic treatment by the laccase in advance, in the same way as described above.

Further, the amount (U) of the laccase to be used per unit volume (L) of the pre-fermentation solution may be specified. That is, in this case, the amount of the laccase to be used for preparing 1 L of the pre-fermentation solution may be, for example, 50 U/L or more, preferably 100 U/L or more. More specifically, the concentration of the laccase may be 50 U/L or more and 200,000 U/L or less, preferably 100 U/L or more and 200,000 U/L or less.

The raw material for the pre-fermentation solution may contain the above-mentioned materials in any combination as long as the alcoholic fermentation by the yeast is conducted. That is, for example, a raw material containing the malt and laccase may be used. In this case, a raw material containing the malt, hops, and laccase may be used.

Meanwhile, for example, a raw material not containing the malt and containing the nitrogen source, carbon source, and laccase may be used. In this case, for example, a raw material not containing the malt and containing the nitrogen source, carbon source, hops, and laccase may be used. Moreover, for example, a raw material not containing the malt and hops and containing the nitrogen source, carbon source, and laccase may be used. In the case where the raw material contains no malt, the protein degradation product may preferably be used as the nitrogen source, and the starch degradation product may preferably be used as the carbon source.

In addition, in the pre-fermentation step 10, the above-mentioned raw material containing the nitrogen source, carbon source, and laccase and water are used to prepare the pre-fermentation solution. That is, for example, firstly, the whole or part of the raw material is mixed with water to prepare a raw material solution. Subsequently, the raw material solution is subjected to a predetermined treatment as described below. In the process, the residual raw material may be added thereto. Finally, the pre-fermentation solution suitable for addition of the yeast is obtained. As water, water for brewing may preferably be used. The temperature of water may be adjusted to a range of 25 to 80°C, for example.

In addition, in the pre-fermentation step 10, an enzymatic reaction by the laccase is further conducted. The enzymatic reaction can be conducted by maintaining the raw material solution containing the laccase at a predetermined temperature for a predetermined time.

The reaction temperature is not particularly limited as long as the laccase acts on a substrate, and the temperature may be, for example, 30°C to 80°C, preferably 40°C to 70°C, and more preferably about 60°C. The reaction time is not particularly limited as long as effects provided by use of the laccase are obtained, and the time may be, for example, 1 minute to 180 minutes, preferably 30 minutes to 120 minutes.

Further, in the case where the raw material solution contains an enzyme other than the laccase and a reaction by the enzyme is conducted in the pre-fermentation step 10, the reaction by the laccase and the reaction by the enzyme may be conducted in parallel (simultaneously) or in series (sequentially).

For example, in the case where the raw material contains the malt, a treatment to allow a degradation enzyme in the malt to act (so-called saccharification treatment) may be conducted simultaneously with the enzymatic treatment by the laccase. That is, the optimum temperature of peptidase or amylase to be allowed to act in the saccharification treatment is similar to that of the laccase, and hence the enzymatic treatment by the laccase may be conducted by conducting the saccharification reaction in the pre-fermentation step 10.

In the case where the rawmaterial contains the hops, a treatment to boil the raw material solution may be conducted in the pre-fermentation step 10. That is, in this case, for example, firstly, a part of the raw material not containing the hops and containing the laccase is mixed with water to prepare the raw material solution. Subsequently, the raw material solution is maintained at the above-mentioned reaction temperature for a predetermined time to conduct the enzymatic treatment by the laccase. Here, in the case where the raw material contains the malt, the saccharification treatment is also conducted in parallel. Then, the hops are added to the raw material solution after the enzymatic treatment, and the raw material solution is boiled by further heating. The boiling treatment is conducted to extract a component in the hops into the raw material solution and to deactivate an enzyme such as the laccase in the raw material solution.

As described above, in the case where the raw material solution is boiled in the pre-fermentation step 10, the laccase may be added before the boiling, and the enzymatic treatment by the laccase may also be conducted before the boiling. It should be noted that addition of the laccase and the enzymatic treatment by the laccase may be conducted after the boiling treatment. In this case, for example, firstly, the saccharification treatment is conducted, and then the boiling treatment is conducted, followed by addition of the laccase to the raw material solution, to thereby conduct the enzymatic treatment by the laccase.

Further, in the case where the hops are added after the enzymatic treatment by the laccase, if hops which have been subjected to the above-mentioned enzymatic treatment by the laccase in advance are used, it is possible to prepare a pre-fermentation solution in which a component in the hops has been sufficiently subjected to the enzymatic treatment by the laccase.

In the pre-fermentation step 10, as described above, preparation of the raw material solution and the enzymatic treatment by the laccase are conducted, and then the raw material solution is filtrated and cooled, to finally prepare a sterile pre-fermentation solution suitable for addition of the yeast in the subsequent fermentation step 20.

In the fermentation step 20, the yeast is added to the pre-fermentation solution prepared in the pre-fermentation step 10 to conduct alcoholic fermentation. In the fermentation step 20, primary fermentation and secondary fermentation (alcohol storage) are conducted. That is, firstly, the yeast is added to the sterile pre-fermentation solution with its temperature adjusted in advance to a predetermined range (for example, a range of 0°C to 40°C), to thereby prepare a fermentation solution.

The yeast is not particularly limited as long as the yeast can conduct alcoholic fermentation, and any kind of yeast may be appropriately selected and used. That is, for example, a beer yeast such as a bottom-fermenting yeast or a top-fermenting yeast may be used, and the bottom-fermenting yeast is preferably used. The density of the yeast in the fermentation solution at the beginning of the fermentation may be appropriately adjusted to, for example, a range of 1×10⁶ cells/mL to 3×10⁹ cells/mL.

Then, the fermentation solution is maintained at a predetermined temperature for a predetermined time to conduct primary fermentation. The temperature of the primary fermentation may be appropriately adjusted to, for example, a range of 0°C to 40°C, preferably a range of 6°C to 15°C. In the primary fermentation, the yeast conducts a metabolic activity such as alcoholic fermentation while consuming the nitrogen source, carbon source in the pre-fermentation solution, and nutritional sources such as vitamins and minerals added if necessary. As a result, ethanol, carbon dioxide, and flavor and taste components (such as esters) are generated in the fermentation solution by the yeast.

The secondary fermentation is conducted by further maintaining the fermentation solution after the primary fermentation at a predetermined temperature for a predetermined time. That is, for example, in the case of using the bottom-fermenting yeast, the supernatant of the fermentation solution where the yeast is precipitated after completion of the primary fermentation is collected. Then, the collected supernatant is further maintained at a temperature in a range of -3°C to 20°C for a time in a range of one day to 150 days. The secondary fermentation may precipitate insoluble matter in the fermentation solution to remove turbidity, and maturation improves the flavor and taste. Further, in the secondary fermentation, carbon dioxide can further be dissolved in the fermentation solution.

Thus, in the fermentation step 20, apost-fermentationsolution containing ethanol and flavor and taste components generated by the yeast is obtained. The concentration of the ethanol in the post-fermentation solution may be in a range of, for example, 1% to 20%, preferably 1% to 10%, more preferably 3% to 10%.

The production method of the present invention may further include a post-fermentation step of finally obtaining the sparkling alcoholic beverage by subjecting the post-fermentation solution prepared as described above to a predetermined treatment. In the post-fermentation step, for example, the yeast in the post-fermentation solution is removed by filtration of the post-fermentation solution. Meanwhile, the post-fermentation solution is subjected to low-temperature sterilization by maintaining the post-fermentation solution at a temperature of 60°C or more for 1 minute or more, or high-temperature sterilization by maintaining the post-fermentation solution at a higher temperature for a shorter time, for example. Moreover, carbon dioxide may be injected into the post-fermentation solution.

Further, the post-fermentation step may further include the step of adding a spirit. That is, in this case, for example, the spirit is added to the sparkling alcoholic beverage obtained as described above in the post-fermentation step. The spirit is preferably one produced from grain as a raw material. That is, a distilled spirit produced by using, for example, barley, wheat, rice, buckwheat, potato, sweet potato, maize, or sugarcane as the raw material may be used, and a distilled spirit produced from barley or wheat as the raw material may be particularly preferably used. The concentration of alcohol in the spirit may be, for example, in a range of 20 to 90 vol%.

A sparkling alcoholic beverage according to this embodiment (hereinafter, referred to as "beverage of the present invention") is preferably produced by the production method of the present invention as described above.

The beverage of the present invention may be, for example, a sparkling alcoholic beverage produced by using the malt and laccase as the raw material for the pre-fermentation solution. In this case, the beverage of the present invention may be a sparkling alcoholic beverage produced by using the malt, hops, and laccase as the raw material for the pre-fermentation solution.

That is, the beverage of the present invention may be, for example, a beer produced by using the laccase as a raw material for the pre-fermentation solution. In addition, the beverage of the present invention may be, for example, a Happoshu produced by using a smaller amount of the malt than that used for a beer, and using the hops and laccase as the raw material for the pre-fermentation solution.

Moreover, the beverage of the present invention may be, for example, a sparkling alcoholic beverage produced by using the nitrogen source, carbon source, and laccase as the raw material for the pre-fermentation solution without using the malt. In this case, the beverage of the present invention may be, for example, a sparkling alcoholic beverage produced by using the nitrogen source, carbon source, hops, and laccase as the raw material for the pre-fermentation solution without using the malt. Moreover, the beverage of the present invention may be, for example, a sparkling alcoholic beverage produced by using the nitrogen source, carbon source, and laccase as the raw material for the pre-fermentation solution without using the malt and hops.

Meanwhile, the beverage of the present invention may be a sparkling alcoholic beverage produced by adding the spirit to the above-mentioned sparkling alcoholic beverage. In this case, the beverage of the present invention may be, for example, a sparkling alcoholic beverage produced by mixing a sparkling alcoholic beverage produced by using the malt and laccase as a part of the raw material for the pre-fermentation solution as described above with the spirit. Further, the beverage of the present invention may be, for example, a sparkling alcoholic beverage produced by mixing a sparkling alcoholic beverage produced by using the nitrogen source, carbon source, and laccase as the raw material for the pre-fermentation solution without using the malt as described above with the spirit.

As described above, when a small amount of the laccase is used as a raw material for the pre-fermentation and allowed to act in the production method of the present invention, the beverage of the present invention is produced as a sparkling alcoholic beverage having improved drinkability compared with a conventional sparkling alcoholic beverage.

Although it has not been clarified how use of the laccase contributes to an improvement in the drinkability of the beverage, for example, even if the laccase is added after conducting the primary fermentation by adding a yeast to the pre-fermentation solution prepared without using the laccase, the drinkability of the resultant sparkling alcoholic beverage cannot be improved effectively. Therefore, it is considered to be important to use the laccase as a raw material for the pre-fermentation solution and to allow the laccase to act.

Further, when the laccase is used as a raw material for the pre-fermentation solution and allowed to act in the pre-fermentation step 10 of the productionmethod of the present invention, the beverage of the present invention has excellent flavor and taste properties compared with the sparkling alcoholic beverage produced without using the laccase.

Although it has also not been clarified how use of the laccase contributes to an improvement in the flavor and taste properties of this beverage, for example, even if the laccase is added after conducting the primary fermentation by adding a yeast to the pre-fermentation solution prepared without using the laccase, the flavor and taste properties of the resultant sparkling alcoholic beverage cannot be improved effectively. Therefore, it is considered to be important to use the laccase as a raw material for the pre-fermentation solution and to allow the laccase to act.

Further, when the laccase is used as a raw material for the pre-fermentation solution and allowed to act in the pre-fermentation step 10 of the productionmethod of the present invention, the beverage of the present invention has excellent foam property compared with the sparkling alcoholic beverage produced without using the laccase.

Although it has also not been clarified how use of the laccase contributes to an improvement in the foam property of this beverage, for example, an increase in the amount of the laccase used tends to improve the foam-stability of this beverage.

It should be noted that the foam-stability of the sparkling alcoholic beverage can be evaluated by, for example, a NIBEM value. The NIBEM value is measured as described below, for example. That is, firstly, a sparkling alcoholic beverage at 20°C is forcibly poured into a cylindrical glass (for example, inner diameter 60 mm, inner height 120 mm) by using carbon dioxide to foam the beverage. Subsequently, a time between when the surface of the foam of the sparkling alcoholic beverage is lowered to 10 mm below the position immediately after foaming the beverage and when the surface is further lowered to 40 mm therebelow is measured by using a commercially available measurement device. The NIBEM value is represented as a time (sec) as measured above.

The NIBEM value of the beverage of the present invention may be, for example, 50 or more, preferably 100 or more, and more preferably 200 or more.

### Examples

Hereinafter, specific examples according to this embodiment are described.

### Example 1

Malt, hops, laccase, and protease were used as a raw material to produce a sparkling alcohol beverage. That is, apre-fermentation solution prepared by using laccase was used to produce a so-called 100% malt beer.

Malt of which soluble nitrogen (SN) is relatively low, i.e., so-called malt with low-level dissolved nitrogen, was used as the malt. Daiwa Y120 (Daiwa Fine Chemicals Co., Ltd.) was used as the laccase.

The titer of the laccase was 108,000 U/g or more. The unit "U" which represents an enzymatic activity is defined as follows. When the laccase is allowed to act on 4-aminoantipyrine and phenol at pH 4.5 and 30°C, the amount of the enzyme required for increasing an absorbance of a quinonimine dye generated by an oxidative condensation reaction catalyzed by the laccase at 505 nm by 0.1 for one minute in a reaction initial time was defined as 1 U. Further, the laccase has an optimum pH of 4.0 to 4.5 and an optimum temperature of 60°C. Sumizyme LP50D (Shin Nihon Chemical Co., Ltd.) was used as the protease.

In Example 1-1, 1,200 g of the malt, 1.2 g of the protease, and 0.03 g of the laccase (0.0025 wt% with respect to the malt) were mixed with water at 60°C to prepare 4L of a raw material solution.

In Example 1-2, 4 L of a raw material solution were prepared by the same procedure as described above in Example 1-1 except that 0.06 g of the laccase (0.005 wt% with respect to the malt) was used. In Example 1-3, 4 L of a raw material solution were prepared by the same procedure as described above in Example 1-1 except that 0.12 g of the laccase (0.01 wt% with respect to the malt) was used. In Example 1-4, 4 L of a raw material solution were prepared by the same procedure as described above in Example 1-1 except that 0.3 g of the laccase (0.025 wt% with respect to the malt) was used.

In Example 1-5, 4 L of a raw material solution were prepared by the same procedure as described above in Example 1-1 except that 0.6 g of the laccase (0.05 wt% with respect to the malt) was used. In Example 1-6, 4 L of a raw material solution were prepared by the same procedure as described above in Example 1-1 except that 1.2 g of the laccase (0.1 wt% with respect to the malt) was used. In Example 1-7, 4 L of a raw material solution were prepared by the same procedure as described above in Example 1-1 except that 3.0 g of the laccase (0.25 wt% with respect to the malt) were used. In Example 1-8, 4 L of a raw material solution were prepared by the same procedure as described above in Example 1-1 except that 6.0 g of the laccase (0.5 wt% with respect to the malt) were used.

Meanwhile, in Example 1-C1, 1,200 g of the malt were mixed with water at 60 °C, to thereby prepare 4 L of a raw material solution. In Example 1-C2, the same amount of the malt as that described above in Example 1-C1 and 1.2 g of the protease were used to prepare 4 L of a raw material solution. Thus, ten kinds of the raw material solutions were prepared.

Subsequently, each of the ten kinds of the raw material solutions was maintained at a temperature in a range of 60°C to 67°C for 90 minutes to conduct an enzymatic reaction by the laccase and a saccharification treatment. After that, 5.45 g of the hops were added to each of the raw material solutions, and the mixtures were subjected to a boiling treatment for 90 minutes. Then, the raw material solutions were subjected to a filtration treatment and cooled to a temperature suitable for addition of a yeast. Thus, 4 L each of ten kinds of pre-fermentation solutions were prepared.

FIG. 2 shows concentrations of the laccase used in the respective examples. The concentration of the laccase (U/g) represents the amount of the laccase (U) used per unit weight (g) of the raw material for the pre-fermentation solution. Meanwhile, the concentration of the laccase (U/L) represents the amount of the laccase (U) used per unit volume (L) of the pre-fermentation solution.

Subsequently, the yeast was added to the pre-fermentation solution to prepare a fermentation solution. The fermentation solution was maintained at a temperature of 11°C for seven days to conduct primary fermentation. After that, the fermentation solution was maintained at a temperature of 0°C to 11°C for 35 days to conduct alcohol storage. The fermentation solution after the alcohol storage (post-fermentation solution) was subjected to a filtration treatment and a sterilization treatment. Thus, ten respective kinds of beer were obtained using the ten kinds of the pre-fermentation solution.

The ten kinds of beer were each subjected to sensory tests by five experienced panelists and measurement of an NIBEM value. It should be noted that in the sensory tests, the beers were evaluated for a variety of items such as: flavors and tastes such as ester odor, malt aroma, sulfur odor, sweet taste, acid taste, harsh taste, and discordant taste; and drinkability. For example, the drinkability was evaluated as ease of drinking judged by whether a panelist wanted to drink one more glass of a sparkling alcoholic beverage after drinking a glass of the beverage. That is, a sparkling alcoholic beverage having high drinkability is considered to be one which someone wanted to drink more of after drinking a glass of the beverage.

FIG. 3 shows the results of the sensory tests. In FIG. 3, the "1-C1, 1-C2, and 1-1 to 1-8" on the horizontal axis represent "Example 1-C, Example 1-C2, and Example 1-1 to Example 1-8," and the vertical axis represents mean values of scores recorded by the panelists. The white bar graph shows the results of comprehensive evaluation, and the black bar graph shows the results of drinkability evaluation. The results show that the beverage is more preferred when the score is higher.

As shown in FIG. 3, the results demonstrate that use of the laccase as apart of the rawmaterial for thepre-fermentation solution improves comprehensive evaluation and drinkability of the beer (in particular, the drinkability is improved). In particular, the effect was significant in Example 1-2.

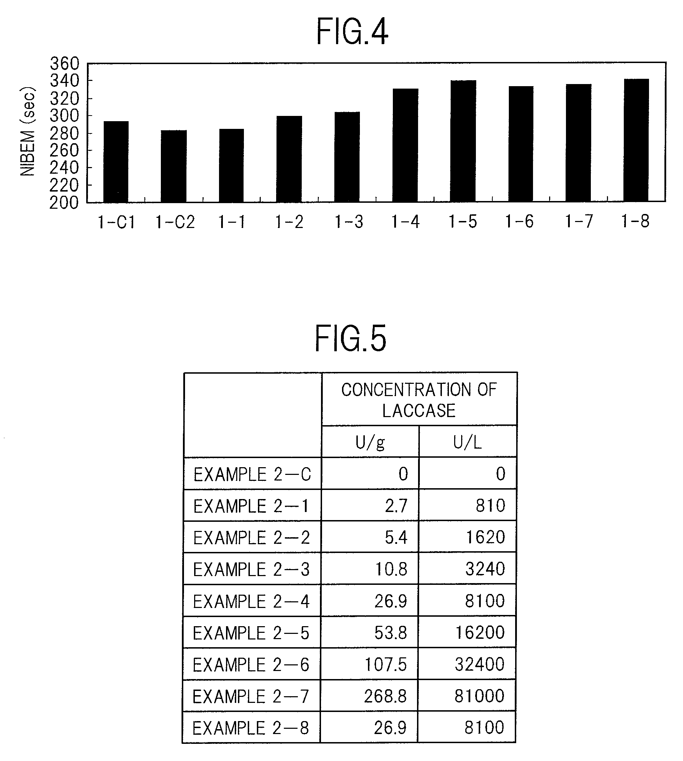

FIG. 4 shows the results of measurement of the NIBEM values. In FIG. 4, "1-C1, 1-C2, and 1-1 to 1-8" on the horizontal axis represent "Example 1-C1, Example 1-C2, and Example 1-1 to Example 1-8," and the vertical axis represents the NIBEM values measured. The results show that the beverage is more preferred when the NIBEM value is higher. As shown in FIG. 4, the results demonstrate that use of the laccase as a part of the raw material for the pre-fermentation solution improves the foam property of the beer rather than impairing the property.

### Example 2

Malt, hops, and laccase were used as a raw material to produce a sparkling alcoholic beverage. That is, a pre-fermentation solution prepared using laccase was used to produce a 100% malt beer. As the malt, malt with middle-level dissolved nitrogen was used. Daiwa Y120 (Daiwa Fine Chemicals Co., Ltd.) used in Example 1 described above was used as the laccase.

In Example 2-1, 1,200 g of the malt and 0.03 g of the laccase (0.0025 wt% with respect to the malt) were mixed with 60°C water to prepare 4 L of a raw material solution. Then, 5.45 g of the hops were added to the raw material solution, and the resultant mixture was subjected to a boiling treatment for 90 minutes and a filtration treatment and cooled, to thereby prepare 4 L of a pre-fermentation solution. Subsequently, the same steps as in Example 1 described above were conducted to produce a beer.

In Example 2-2, 4 L of a pre-fermentation solution were prepared by the same procedure as described above in Example 2-1 except that 0.06 g of the laccase (0.005 wt% with respect to the malt) was used, to thereby produce a beer. In Example 2-3, 4 L of a pre-fermentation solution were prepared by the same procedure as described above in Example 1-1 except that 0.12 g of the laccase (0.01 wt% with respect to the malt) was used, to thereby produce a beer. In Example 2-4, 4 L of a pre-fermentation solution were prepared by the same procedure as described above in Example 2-1 except that 0.3 g of the laccase (0.025 wt% with respect to the malt) was used, to thereby produce a beer.

In Example 2-5, 4 L of a pre-fermentation solution were prepared by the same procedure as described above in Example 2-1 except that 0.6 g of the laccase (0.05 wt% with respect to the malt) was used, to thereby produce a beer. In Example 2-6, 4 L of a pre-fermentation solution were prepared by the same procedure as described above in Example 2-1 except that 1.2 g of the laccase (0.1 wt% with respect to the malt) was used, to thereby produce a beer. In Example 2-7, 4 L of a pre-fermentation solution were prepared by the same procedure as described above in Example 2-1 except that 3.0 g of the laccase (0.25 wt% with respect to the malt) were used, to thereby produce a beer.

In Example 2-8, firstly, 1,200 g of the malt was mixed with water at 60°C to prepare 4 L of a raw material solution not containing the laccase. Then, 5.45 g of the hops were added to the raw material solution, and the mixture was subjected to a boiling treatment for 90 minutes and a filtration treatment and cooled to prepare 4 L ofapre-fermentationsolution. Subsequently,primaryfermentation was conducted in the same way as in Example 1 described above. Next, 0.3 g of the laccase (0.025 wt% with respect to the malt) was added to the fermentation solution after the primary fermentation, followed by alcohol storage, to thereby produce a beer. That is, in Example 2-8, the beer was produced under the same conditions as in Example 2-4 described above except that addition of the laccase was conducted after the primary fermentation and before the alcohol storage instead of before fermentation.

Further, in Example 2-C, 1,200 g of the malt was mixed with water at 60°C to prepare 4 L of a raw material solution. Then, 5.45 g of the hops were added to the raw material solution, and the mixture was subjected to a boiling treatment for 90 minutes and a filtration treatment and cooled to prepare 4 L of a pre-fermentation solution. Subsequently, a beer was produced in the same way as in Example 1 described above. Thus, nine kinds of beer were obtained.

FIG. 5 shows concentrations of the laccase used in the respective examples. The concentration of the laccase (U/g) represents the amount of the laccase (U) used per unit weight (g) of the raw material for the pre-fermentation solution. Meanwhile, the concentration of the laccase (U/L) represents the amount of the laccase (U) used per unit volume (L) of the pre-fermentation solution for each of Example 2-1 to Example 2-7, and Example 2-C, and per unit volume (L) of the fermentation solution for Example 2-8.

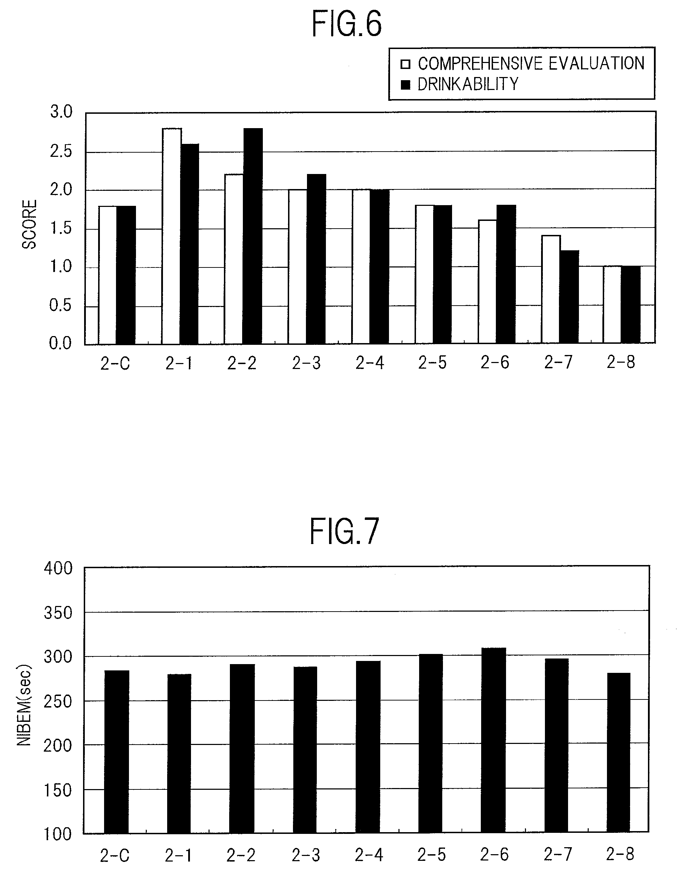

The nine kinds of beer were each subjected to sensory tests by five experienced panelists and measurement of an NIBEM value. FIG. 6 shows the results of the sensory tests. In FIG. 6, "2-C and 2-1 to 8" on the horizontal axis represent "Example 2-C and Example 2-1 to Example 2-8," and the vertical axis represents mean values of scores recorded by the panelists. The white bar graph shows the results of comprehensive evaluation, and the black bar graph shows the results of drinkability evaluation.

As shown in FIG. 6, the results demonstrate that use of the laccase as a part of the rawmaterial for the pre-fermentation solution improves comprehensive evaluation and drinkability of the beer (in particular, the drinkability is improved). In particular, the effect was significant in Example 2-1 and Example 2-2.

On the other hand, in Example 2-8 where the laccase was not added before fermentation and was added after primary fermentation, preferred results of both the sensory evaluation and the drinkability were not obtained. That is, it was considered that use of the laccase as a part of the raw material for the pre-fermentation solution provided an effect of improving the comprehensive evaluation and drinkability in the sensory tests.

FIG. 7 shows the results of measurement of the NIBEM values. In FIG. 7, "2-C and 2-1 to 2-8" on the horizontal axis represent "Example 2-C and Example 2-1 to Example 2-8," and the vertical axis represents the NIBEMvaluesmeasured. As shown in FIG. 7, the results demonstrate that use of the laccase as a part of the raw material for the pre-fermentation solution improves the foam property of the beer rather than impairing the property. On the other hand, in Example 2-8 where the laccase was added after the primary fermentation, the NIBEM value was somewhat lower compared with Example 2-C where the laccase was not used.

### Example 3

Malt, hops, and laccase were used as a raw material to produce a sparkling alcohol beverage on a pilot scale. That is, a pre-fermentation solution prepared by using laccase was used to produce a 100% malt beer on a 400 L scale. As the malt, malt with middle-level dissolved nitrogen was used as in Example 2 described above. Daiwa Y120 (Daiwa Fine Chemicals Co., Ltd.) used in Example 1 described above was used as the laccase.

In Example 3-1, 120 kg of the malt and 6 g of the laccase (0.05 wt% with respect to the malt) were mixed with water at 60 °C to prepare 400 L of a raw material solution. Then, 545 g of the hops were added to the raw material solution, and the resultant mixture was subj ected to a boiling treatment for 90 minutes and a filtration treatment and cooled, to thereby prepare 400 L of a pre-fermentation solution. Subsequently, the same steps as in Example 1 described above were conducted to produce a beer. Concentrations of the laccase used in Example 3-1 were 5.4 (U/g) per unit weight of the raw material for the pre-fermentation solution and 1,620 (U/L) per unit volume of the pre-fermentation solution.

In Example 3-2, 400 L of a pre-fermentation solution were prepared by the same procedure as described above in Example 3-1 except that 30 g of the laccase (0.025 wt% with respect to the malt) were used, to thereby produce a beer. Concentrations of the laccase used in Example 3-2 were 26. 9 (U/g) per unit weight of the raw material for the pre-fermentation solution and 8,100 (U/L) per unit volume of the pre-fermentation solution.

Further, in Example 3-C, 120 kg of the malt was mixed with water at 60°C to prepare 400 L of a raw material solution. Then, 545 g of the hops were added to the raw material solution, and the resultant mixture was subjected to a boiling treatment for 90 minutes and a filtration treatment and cooled, to thereby prepare 400 L of a pre-fermentation solution. Subsequently, the same steps as in Example 1 described above were conducted to produce a beer without using the laccase. Thus, three kinds of beer were obtained.

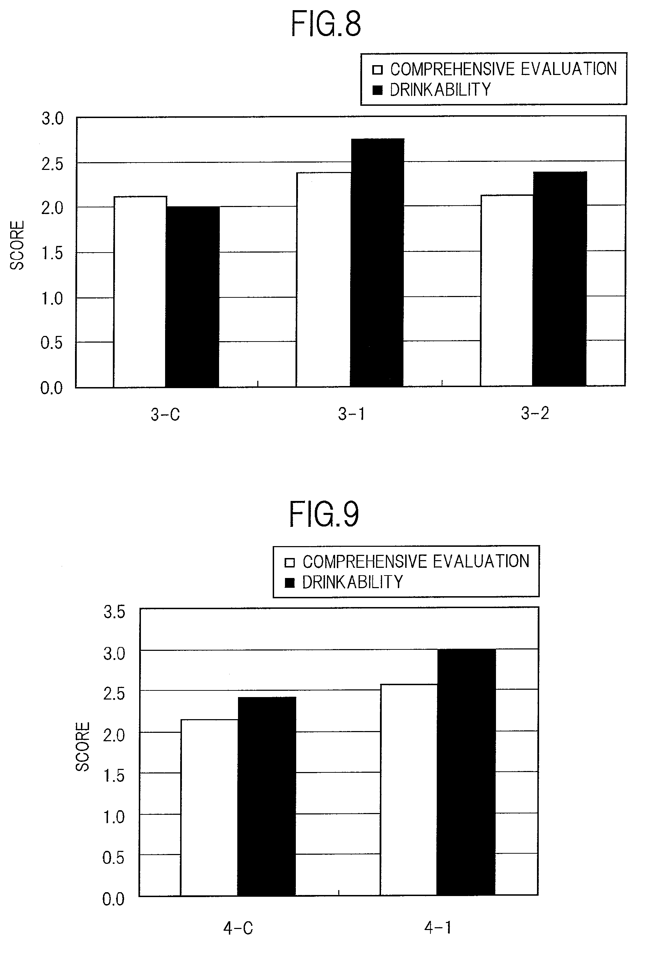

The three kinds of beer were each subjected to sensory tests by ten experienced panelists. FIG. 8 shows the results of the sensory tests. In FIG. 8, "3-C, 3-1, and 3-2" on the horizontal axis represent "Example 3-C, Example 3-1, and 3-2, " and the vertical axis represents mean values of scores recorded by the panelists. The white bar graph shows the results of comprehensive evaluation, and the black bar graph shows the results of drinkability evaluation.

As shown in FIG. 8, the results demonstrate that use of the laccase as a part of the rawmaterial for the pre-fermentation solution improves comprehensive evaluation and drinkability (in particular, drinkability) of the beer.

### Example 4

Malt, a liquid sugar, hops, and laccase were used as a raw material to produce a sparkling alcohol beverage. The amount of the malt used accounted for about 24 wt% of the raw material. That is, a pre-fermentation solution prepared by using laccase was used to produce a Happoshu.

As the malt, malt with middle-level dissolved nitrogen was used. As the liquid sugar, S75C (Japan Corn Starch Co., Ltd.) was used. The liquid sugar contained a solid content at 75 wt%. Daiwa Y120 (Daiwa Fine Chemicals Co., Ltd.) used in Example 1 described above was used as the laccase.

In Example 4-1, 206 g of the malt, 686 g of the liquid sugar (solid content: 514. 5 g), and 0.15 g of the laccase were mixed with water at 60°C, to thereby prepare 4L of a raw material solution. Then, 3.76 g of the hops were added to the raw material solution, and the mixture was subjected to a boiling treatment for 80 minutes and a filtration treatment and cooled, to thereby prepare 4 L of a pre-fermentation solution. Subsequently, the same steps as those in Example 1 described above were conducted to produce a Happoshu. Concentrations of the laccase used in Example 4-1 were 22.4 (U/g) per unit weight of the raw material for the pre-fermentation solution and 4,050 (U/L) per unit volume of the pre-fermentation solution. It should be noted that in calculation of the weight of the raw material, the weight of the solid content in the liquid sugar (514.5 g) was used instead of the total weight of the liquid sugar (686 g).

Further, in Example 4-C, 206 g of the malt and 686 g of the liquid sugar (solid content: 514.5 g) were mixed with 60°C water to prepare 4 L of a raw material solution. Then, 3.76 g of the hops were added to the raw material solution, and the resultant mixture was subjected to a boiling treatment for 90 minutes and a filtration treatment and cooled, to thereby prepare 4 L of a pre-fermentation solution. Subsequently, the same steps as in Example 4-1 described above were conducted to produce a Happoshu without using the laccase. Thus, two kinds of Happoshu were obtained.

The two kinds of Happoshu were each subjected to sensory tests by six experienced panelists. FIG. 9 shows the results of the sensory tests. In FIG. 9, "4-C and 4-1" on the horizontal axis represent "Example 4-C and Example 4-1," and the vertical axis represents mean values of scores recorded by the panelists. The white bar graph shows the results of comprehensive evaluation, and the black bar graph shows the results of drinkability evaluation.

As shown in FIG. 9, the results demonstrate that use of the laccase as a part of the raw material for the pre-fermentation solution improves comprehensive evaluation and drinkability of the Happoshu.

### Example 5

A yellow pea protein, a yellow pea protein degradation product, a liquid sugar, hops, and laccase were used as a raw material to produce a sparkling alcoholic beverage. That is, a pre-fermentation solution prepared using the laccase without using the malt as a raw material was used to produce the sparkling alcoholic beverage.

As the yellow pea protein, a protein extracted from yellow peas was used. As the yellow pea protein degradation product, a composition containing a peptide and an amino acid prepared by degrading the yellow pea protein with an enzyme was used. S75C (Japan Corn Starch Co., Ltd.) containing a solid content at 75 wt%, which was used in Example 4 described above, was used as the liquid sugar. Daiwa Y120 (Daiwa Fine Chemicals Co., Ltd.) used in Example 1 described above was used as the laccase.

In Example 5-1, 7.8 g of the yellow pea protein composition, 600 g of the liquid sugar (solid content: 450 g), and 0.15 g of the laccase were mixed with water at 60°C, to thereby prepare 4L of a raw material solution.

The enzymatic reaction by the laccase was conducted by maintaining the raw material solution at 60°C for 20 minutes. After that, 2.88 g of the hops were added to the raw material solution, and the mixture was subjected to a boiling treatment for 90 minutes. Subsequently, the steps of filtration, alcoholic fermentation, and the like were conducted in the same way as in Example 1, to thereby produce a sparkling alcoholic beverage.

Concentrations of the laccase used in Example 5-1 were 35.1 (U/g) per unit weight of the raw material for the pre-fermentation solution and 4,050 (U/L) per unit volume of the pre-fermentation solution. It should be noted that in calculation of the weight of the raw material for the pre-fermentation solution, the weight of the solid content in the liquid sugar was used in the same way as in Example 4 described above.

Further, in Example 5-C, 7.8 g of the pea protein composition and 600 g of the liquid sugar (solid content: 450 g) were mixed with water at 60°C, to thereby prepare 4L of a raw material solution. Then, 2.88 g of the hops were added to the raw material solution, and the mixture was subjected to a boiling treatment for 60 minutes. Subsequently, the same steps as those in Example 5-1 described above were conducted to produce a sparkling alcoholic beverage without using the laccase. Thus, two kinds of sparkling alcoholic beverage were obtained.

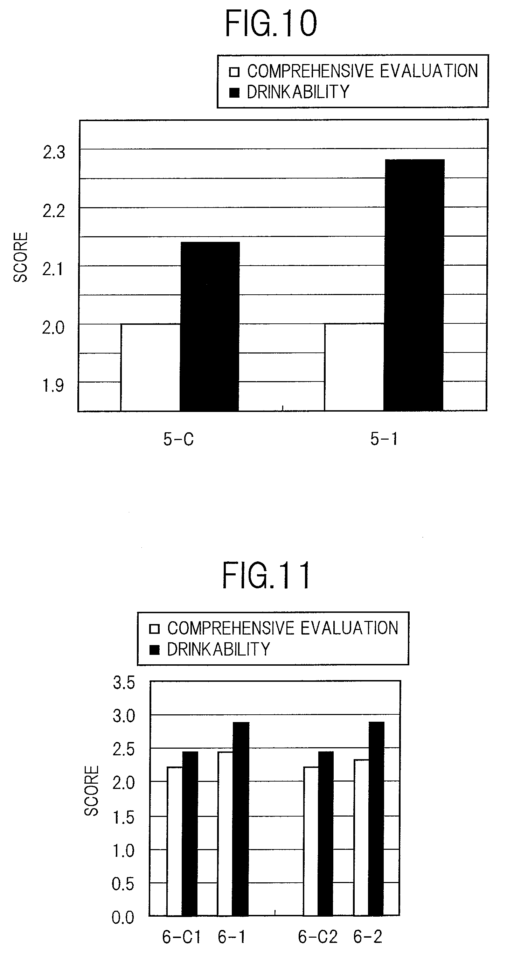

The two kinds of the sparkling alcoholic beverage were each subjected to sensory tests by six experienced panelists. FIG. 10 shows the results of the sensory tests. In FIG. 10, "5-C and 5-1" on the horizontal axis represent "Example 5-C and Example 5-1," and the vertical axis represents mean values of scores recorded by the panelists. The white bar graph shows the results of comprehensive evaluation, and the black bar graph shows the results of drinkability evaluation.

As shown in FIG. 10, the results demonstrate that use of the laccase as a part of the rawmaterial for the pre-fermentation solution significantly improves the drinkability of the sparkling alcoholic beverage.

Meanwhile, components in the sparkling alcoholic beverages produced in Examples 1, 4, and 5 described above were quantified, and the sparkling alcoholic beverage produced by using the laccase as a part of the raw material in the pre-fermentation solution was confirmed to have a decreased hydrogen sulfide content compared with the sparkling alcoholic beverage produced without using the laccase.

The hydrogen sulfide content increases in a case where, for example, the ratio of the malt used in the raw material is low in the sparkling alcoholic beverage produced by using the malt as a part of the raw material, and hydrogen sulfide is a component which impairs the flavor and taste.

Therefore, the above-mentioned quantification results which suggest that the amount of hydrogen sulfide in the sparkling alcoholic beverage is reduced by using the laccase as a part of the raw material for the pre-fermentation solution support the above-mentioned sensory test results which suggest that the flavor and taste properties of the sparkling alcoholic beverage are improved by using the laccase.

### Example 6

A pre-fermentation solution prepared by using laccase was used to produce a 100% LOX-less-malt beer.

That is, in Example 6-1, LOX-less malt, hops, laccase, and protease were used as the rawmaterial to produce a sparkling alcoholic beverage. As the LOX-less malt, LOX-less malt with low-level dissolved nitrogen was used in the same way as in Example 1 described above. Daiwa Y120 (Daiwa Fine Chemicals Co., Ltd.) used in Example 1 described above was used as the laccase. Sumizyme LP50D (Shin Nihon Chemical Co., Ltd.) used in Example 1 described above was used as the protease.

Specifically, as in Example 6-1, 1,200 g of the LOX-less malt, 1.2 g of the protease, and 0.06 g of the laccase (0.005 wt% with respect to the LOX-less malt) were mixed with water at 60°C to prepare 4 L of a raw material solution. Then, 5.45 g of the hops were added to the raw material solution, and the resultant mixture was subj ected to a boiling treatment for 90 minutes and a filtration treatment and cooled, to thereby prepare 4 L of a pre-fermentation solution. Subsequently, the same steps as in Example 1 described above were conducted to produce a beer.

In Example 6-C1, 1,200 g of the LOX-less malt with low-level dissolved nitrogen and 1.2 g of the protease were mixed with water at 60°C to prepare 4 L of a raw material solution in the same way as Example 6-1. Then, 5.45 g of the hops were added to the raw material solution, and the resultant mixture was subjected to a boiling treatment for 90 minutes and a filtration treatment and cooled, to thereby prepare4L of a pre-fermentation solution. Subsequently, the same steps as in Example 1 described above were conducted to produce a beer.

In Example 6-2, the LOX-less malt, hops, and laccase as the raw material to produce a sparkling alcoholic beverage. The LOX-less malt with middle-level dissolved nitrogen was used as the LOX-less malt in the same way as in Example 2 described above. Daiwa Y120 (Daiwa Fine Chemicals Co., Ltd.) was used as the laccase in the same way as in Example 6-1 described above.

Specifically, 1,200 g of the LOX-less malt and 0.06 g of the laccase (0.005 wt% with respect to the LOX-less malt) were mixed with water at 60°C to prepare 4 L of a raw material solution. Then, 5.45 g of the hops were added to the raw material solution, and the resultant mixture was subjected to a boiling treatment for 90 minutes and a filtration treatment and cooled, to thereby prepare 4 L of a pre-fermentation solution. Subsequently, the same steps as in Example 1 described above were conducted to produce a beer.

In Example 6-C2, 1,200 g of the LOX-less malt with medium-level dissolved nitrogen were mixed with water at 60°C to prepare 4 L of a raw material solution in the same way as Example 6-2. Then, 5.45 g of the hops were added to the raw material solution, and the resultant mixture was subjected to a boiling treatment for 90 minutes and a filtration treatment and cooled, to thereby prepare 4 L of a pre-fermentation solution. Subsequently, the same steps as in Example 1 described above were conducted to produce a beer.

It should be noted that concentrations of the laccase used in Examples 6-1 and 6-2 were 5.4 U/g per unit weight of the raw material for the pre-fermentation solution and 1,620 U/L per unit volume of the pre-fermentation solution.

The obtained four kinds of beer were each subjected to sensory tests by nine experienced panelists. FIG. 11 shows the results of the sensory tests. In FIG. 11, the "6-C1, 6-1, 6-C2, and 6-2" on the horizontal axis represent "Examples 6-C1, 6-1, 6-C2, and 6-2," and the vertical axis represents mean values of scores recorded by the panelists. The white bar graph shows the results of comprehensive evaluation, and the black bar graph shows the results of drinkability evaluation.

As shown in FIG. 11, the results demonstrate that in the case where the LOX-less malt is used, use of the laccase as a part of the raw material for the pre-fermentation solution improves comprehensive evaluation and drinkability of the beer (in particular, the drinkability is improved) more greatly.

### Example 7

Barley, hops, laccase, protease, and α-amylase were used as a raw material to produce a sparkling alcoholic beverage. That is, a pre-fermentation solution prepared using the barley and the laccase without using the malt as the raw material was used to produce a sparkling alcoholic beverage made from 100% barley.

Pulverized barley was used as the barley. Daiwa Y120 (Daiwa Fine Chemicals Co., Ltd.) used in Example 1 described above was used as the laccase. Sumizyme LP50D (Shin Nihon Chemical Co., Ltd.) used in Example 1 described above was used as the protease. Commercially available α-amylase was used as the α-amylase.

In Example 7-1, 1,080 g of the barley, 0.027 g of the laccase (0.0025 wt% with respect to the barley), 1.08 g of the protease, and 1.08 g of the α-amylase were mixed with water at 50°C, to thereby prepare 4 L of a raw material solution.

Then, the raw material solution was maintained at 50°C for 30 minutes to conduct an enzymatic reaction mainly by the protease and laccase. Next, the raw material solution was heated to increase the temperature and maintained at 65°C for 60 minutes to conduct an enzymatic reaction mainly by the α-amylase and laccase. After that, 7.01 g of the hops were added to the raw material solution, and the mixture was subjected to a boiling treatment for 90 minutes. Subsequently, the steps of the filtration, alcoholic fermentation, and the like were conducted in the same way as in Example 1 described above, to thereby produce a sparkling alcoholic beverage.

Concentrations of the laccase used in Example 7-1 were 2.7 (U/g) per unit weight of the raw material for the pre-fermentation solution and 729 (U/L) per unit volume of the pre-fermentation solution.

In Example 7-2, the same procedure as in Example 7-1 described above was repeated except that 0.054 g of the laccase (0.005 wt% with respect to the barley) was used, to thereby produce 4 L of a raw material solution. In Example 7-3, the same procedure as in Example 7-1 described above was repeated except that 0.108 g of the laccase (0.01 wt% with respect to the barley) was used, to thereby produce 4 L of a raw material solution. In Example 7-4, the same procedure as in Example 7-1 described above was repeated except that 0.270 g of the laccase (0.025 wt% with respect to the barley) was used, to thereby produce 4 L of a raw material solution. In Example 7-5, the same procedure as in Example 7-1 described above was repeated except that 1.08 g of the laccase (0.1 wt% with respect to the barley) was used, to thereby produce 4 L of a raw material solution. In Example 7-6, the same procedure as in Example 7-1 described above was repeated except that 5.40 g of the laccase (0.5 wt% with respect to the barley) was used, to thereby produce 4 L of a raw material solution.

Concentrations of the laccase used in the above-mentioned examples (concentrations per unit weight of the raw material for the pre-fermentation solution (U/g) and concentrations per unit volume of the pre-fermentation solution (U/L)) were 5.4 U/g and 1,458 U/L in Example 7-2, 10.8 U/g and 2,916 U/L in Example 7-3, 27.0 U/g and 7,290 U/L in Example 7-4, 108 U/g and 29,160 U/L in Example 7-5, and 540 U/g and 145, 800 U/L in Example 7-6, respectively.

Subsequently, a sparkling alcoholic beverage was produced in the same way as in Example 7-1 described above. That is, the raw material solution was maintained at 50°C for 30 minutes to conduct an enzymatic reaction mainly by the protease and laccase. Next, the raw material solution was heated to increase the temperature and maintained at 65°C for 60 minutes to conduct an enzymatic reaction mainly by the α-amylase and laccase. After that, 7.01 g of the hops were added to the raw material solution, and the mixture was subj ected to a boiling treatment for 90 minutes. Subsequently, the steps of the filtration, alcoholic fermentation, and the like were conducted in the same way as in Example 1 described above.

Further, in Example 7-C1, 1,080 g of the barley and 1.08 g of the α-amylase were mixed with water at 50°C, to thereby prepare 4 L of a raw material solution. Further, in Example 7-C2, 1,080 g of the barley, 1.08 g of the protease, and 1.08 g of the α-amylase were mixed with water at 50°C, to thereby prepare 4 L of a raw material solution.

Subsequently, a sparkling alcoholic beverage was produced in the same way as in Example 7-1 described above. That is, the raw material solution was maintained at 50°C for 30 minutes to conduct an enzymatic reaction mainly by the protease and laccase. Next, the raw material solution was heated to increase the temperature and maintained at 65°C for 60 minutes to conduct an enzymatic reaction mainly by the α-amylase and laccase. After that, 7.01 g of the hops were added to the raw material solution, and the mixture was subj ected to a boiling treatment for 90 minutes. Subsequently, the steps of the filtration, alcoholic fermentation, and the like were conducted in the same way as in Example 1 described above.

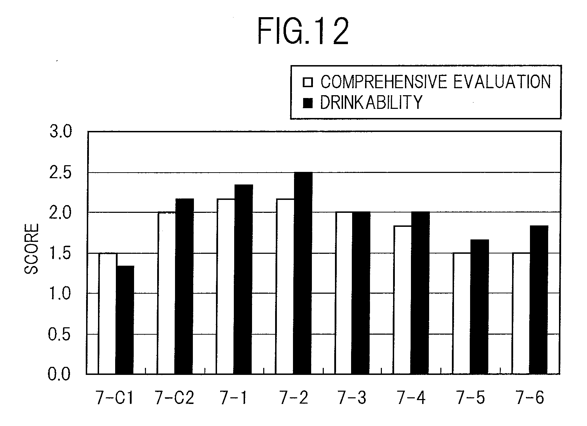

The obtained eight kinds of beer were each subjected to sensory tests by six experienced panelists. FIG. 12 shows the results of the sensory tests. In FIG. 12, the "7-C1, 7-C2, and 7-1 to 6" on the horizontal axis represent "Examples 7-C1, 7-C2, and 7-1 to 7-6, " and the vertical axis represents mean values of scores recorded by the panelists. The white bar graph shows the results of comprehensive evaluation, and the black bar graph shows the results of drinkability evaluation.

As shown in FIG. 12, the results demonstrate that, also in the case of using the barley without using the malt (in particular, in the case where the raw material contain 1 U/g or more and 10 U/g or less of the laccase), the use of the laccase as a part of the raw material for the pre-fermentation solution improves the comprehensive evaluation and drinkability of the beer (in particular, the drinkability is improved).

## Claims

1. A method for producing a sparkling alcoholic beverage, comprising:
a pre-fermentation step of preparing a pre-fermentation solution by using a raw material containing a nitrogen source and a carbon source and water; and
a fermentation step of conducting alcoholic fermentation by adding a yeast to the pre-fermentation solution,
wherein the raw material contains laccase in the pre-fermentation step.

2. The method for producing a sparkling alcoholic beverage according to claim 1, wherein the raw material contains 550 U/g or less of the laccase.

3. The method for producing a sparkling alcoholic beverage according to claim 2, wherein the raw material contains 1 U/g or more and 550 U/g or less of the laccase.

4. The method for producing a sparkling alcoholic beverage according to claim 3, wherein the raw material contains 1 U/g or more and 60 U/g or less of the laccase.

5. The method for producing a sparkling alcoholic beverage according to claim 4, wherein the raw material contains 1 U/g or more and 50 U/g or less of the laccase.

6. The method for producing a sparkling alcoholic beverage according to any one of claims 1 to 5, wherein the raw material contains malt prepared from barley lipoxygenase-1-less barley.

7. A sparkling alcoholic beverage produced by the method according to any one of claims 1 to 6.
